# EUROPEAN PATENT SPECIFICATION

(11) **EP 3 086 170 B1**
(45) Date of publication and mention of the grant of the patent: **02.12.2020**
(21) Application number: 15189705.5
(22) Date of filing: 14.10.2015
(51) Int. Cl.: G02F 1/1343, G02F 1/1337, G02F 1/1362, G02F 1/1333, G02F 1/1339, G09G 3/36

(54) **LIQUID CRYSTAL DISPLAY**
FLÜSSIGKRISTALLANZEIGE
UNITÉ D'AFFICHAGE À CRISTAUX LIQUIDES

(30) Priority: 21.04.2015 KR 20150056172; 03.09.2015 KR 20150125102
(43) Date of publication of application: 26.10.2016
(73) Proprietor: LG Display Co., Ltd., SEOUL, 07336 (KR)
(72) Inventor: WOO, ChangSeung, 412-020 Gyeonggi-do (KR); HONG, Soonhwan, 122-802 Seoul (KR)
(74) Representative: Ter Meer Steinmeister & Partner

(56) References cited:
- WO-A2-2004/029921
- US-A1- 2010 245 733
- US-A1- 2011 216 278
- US-A1- 2013 342 781
- US-A1- 2014 139 796
- US-A1- 2014 247 411
- Falu Yang ET AL: "High Performance Advanced Super Dimension Switch (ADS) Mode LCD with Negative Dielectric Anisotropy LC Optimization", , 6 June 2014 (2014-06-06), XP055166777, Retrieved from the Internet: URL:http://onlinelibrary.wiley.com/store/1 0.1002/j.2168-0159.2014.tb00086.x/asset/sd tp00086.pdf?v=1&t=i5p293xs&s=c333236b1c762 12d517e959bf896dd8a8659bee1 [retrieved on 2015-02-03]

## Description

### BACKGROUND OF THE INVENTION

### Field of the Invention

Embodiments of the invention relate to a liquid crystal display 1 according to the appended claims.

### Discussion of the Related Art

Various flat panel displays, such as a liquid crystal display (LCD), a plasma display panel (PDP), an organic light emitting diode (OLED) display, and an electrophoresis display (EPD), have been developed. The liquid crystal display displays an image by controlling an electric field applied to liquid crystal molecules based on a data voltage. An active matrix liquid crystal display includes a thin film transistor (TFT) in each pixel.

The liquid crystal display includes a liquid crystal display panel, a backlight unit irradiating light onto the liquid crystal display panel, source driver integrated circuits (ICs) for supplying a data voltage to data lines of the liquid crystal display panel, gate driver ICs for supplying gate pulses (or scan pulses) to gate lines (or scan lines) of the liquid crystal display panel, a control circuit for controlling the source driver ICs and the gate driver ICs, a light source driving circuit for driving light sources of the backlight unit, and the like.

When a DC voltage is applied to liquid crystals of the liquid crystal display, image persistence may be generated. The image persistence is a phenomenon, in which a previous image is seen although a screen image is updated. The image persistence remarkably appears when a static image is displayed on the liquid crystal display for a long period of time or an application time of the DC voltage applied to the liquid crystals increases. As an example of a mechanism generating the image persistence, there is a phenomenon, in which impurity ions in a liquid crystal layer are accumulated on an alignment layer for setting a pretilt angle of liquid crystal molecules. Negatively charged ions and positively charged ions based on a polarity of an electric field applied to the liquid crystals move along a motion vector and are polarized in opposite directions. Because the motion vector is not changed, an amount of impurity ions accumulated on the alignment layer increases as time passed. An increase in the amount of impurity ions affects a behavior characteristic returning to an initial alignment state of the liquid crystals, thereby generating the image persistence.

The liquid crystal display may operate in a low speed driving mode so as to reduce power consumption and may reduce a frame rate or a frame frequency when an input image is the static image. However, when the frame frequency is reduced, a luminance may be suddenly changed each time the data voltage is changed. Further, because a voltage discharge time of the pixel increases, a flicker phenomenon, in which the image flickers, may be generated. Thus, a method capable of preventing a reduction in image quality of the liquid crystal display in the low speed driving mode is required.

Further, the low speed driving mode is weak to the image persistence because the application time of the DC voltage applied to the liquid crystals increases. Thus, a method capable of preventing a reduction in the image quality of the liquid crystal display in the low speed driving mode is required.

US 2014/0139796 A1 describes an array substrate of a liquid crystal display, including: a substrate; a first electrode disposed on the substrate; a second electrode located above and electrically insulated from the first electrode; an orientation film disposed on the second electrode, and at least one shunt electrode connected to the first electrode through a via to divert residual charges left over a surface of a liquid crystal molecule. The shunt electrode is located at a side of the orientation film not contacting the liquid crystal molecule.

US 2011/0216278 A1 describes an array substrate including a pixel that includes: a lower electrode connected to a switching device; an insulating film formed on the lower electrode; and an upper electrode that is formed on the insulating film to generate a fringe electric field between the lower electrode and the upper electrode, and wherein, in an area where the upper electrode is not formed and light is not transmitted, a contact hole is provided on a conducting pattern having the same potential as the lower electrode, by removing the insulating film.

US 2014/0247411 A1 describes a liquid crystal display that includes pixel electrodes and common electrodes disposed on a first substrate that overlap each other with a passivation layer interposed therebetween, and a connection portion disposed between a common voltage applying unit and the common electrode. First cutouts of the common electrode and second cutouts of the passivation layer have substantially the same planar shape.

Falu Yang ET AL, "High Performance Advanced Super Dimension Switch (ADS) Mode LCD with Negative Dielectric Anisotropy LC Optimization", 6 June 2014, XP055166777, URL: http://onlinelibrary.wiley.com/store/10.1002/j.2168-0159.2014.tb00086.x/asset/sdtp00086.pdf?v=1&t=i5p293xs&s=c333236b1c76212d51 7e959bf896dd8a8659bee1, retrieved on 2015-02-03, mentions that a LC with negative dielectric anisotropy was chosen because of its high light efficiency.

WO 2004/0029921 A2 relates a manufacturing method of a liquid crystal display, including inserting lower parts of pillars maintaining cell gaps between a lower substrate and an upper substrate of the liquid crystal display into an upper part of a via hole contacting a drain electrode with a pixel electrode of a thin film transistor, and for easily erecting the inserted pillars by forming the via hole in a straight line with a rubbing direction.

US 2010/0245733 A1 describes a liquid crystal display device in which portions of a metal film are arranged on the transparent electrode to form pedestals corresponding to support columns.

US 2013/0342781 A1 describes an LCD device in which a protrusion pattern is formed on a gate line, and a column spacer is formed on a second substrate corresponding to the protrusion pattern.

### SUMMARY OF THE INVENTION

The invention is indicated in the independent claim. Further embodiments are indicated in the dependent claims.

Embodiments of the invention provide a liquid crystal display capable of preventing a reduction in image quality in a low speed driving mode.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1 is a block diagram showing a liquid crystal display according to an exemplary embodiment of the invention;
FIG. 2 shows a structure of a lower plate of a liquid crystal display according to a first embodiment of the invention;
FIG. 3 shows a structure of a lower plate of a liquid crystal display according to a second embodiment of the invention;
FIGS. 4A and 4B show a result of an image persistence experiment conducted on a related art and an embodiment of the invention;
FIG. 5 shows an image pattern of a sample used in an image persistence experiment;
FIGS. 6A to 6E show various ratios of a contact area between an alignment layer and a pixel electrode to a contact area between the alignment layer and a common electrode;
FIG. 7 is a plane view enlarging one subpixel in a liquid crystal display according to a not claimed example;
FIG. 8 is a cross-sectional view taken along line I-I' of FIG. 7 and shows a cross-sectional structure of a lower plate of a liquid crystal display;
FIG. 9 is a cross-sectional view showing conductive connectors overlapping a data line and column spacer according to an embodiment of the invention;
FIG. 10 shows a structure of a lower plate of a liquid crystal display according to a not claimed example;
FIG. 11 shows a structure of a lower plate of a liquid crystal display according to a not claimed example;
FIG. 12 is a plane view enlarging one subpixel in a liquid crystal display according to FIG:10;
FIG. 13 is a cross-sectional view taken along line II-II' of FIG. 12 and shows a cross-sectional structure of a lower plate of a liquid crystal display;
FIG. 14 is a cross-sectional view showing a method for forming an open hole in the liquid crystal display shown in FIG. 13;
FIG. 15 is a plane view showing a comparison between an example and a comparative example with respect to an open area of a pixel structure; and
FIG. 16 is cross-sectional views taken along lines III-III' and IV- IV' of FIG. 15 and shows a cross-sectional structure of a lower plate of a liquid crystal display.

### DETAILED DESCRIPTION OF THE EMBODIMENTS

Reference will now be made in detail to embodiments of the invention, examples of which are illustrated in the accompanying drawings. Wherever possible, the same reference numbers will be used throughout the drawings to refer to the same or like parts. It will be paid attention that detailed description of known arts will be omitted if it is determined that the arts can mislead the embodiments of the invention.

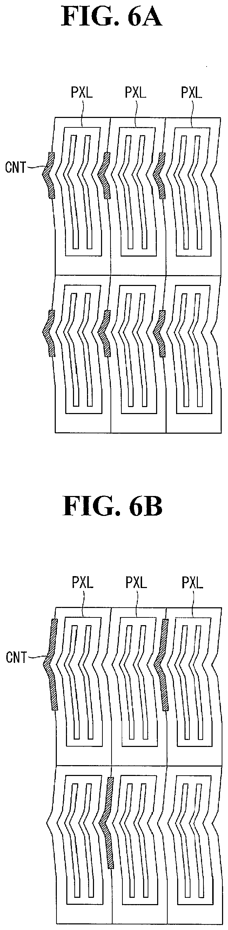

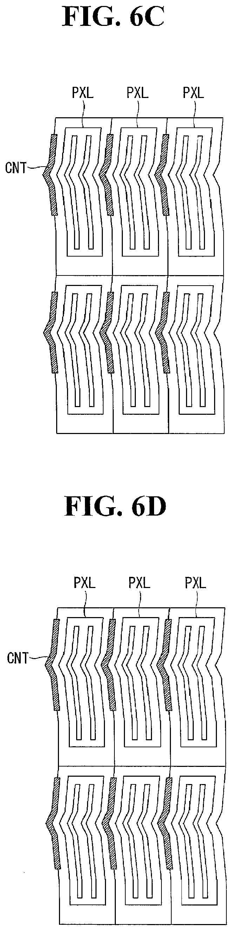

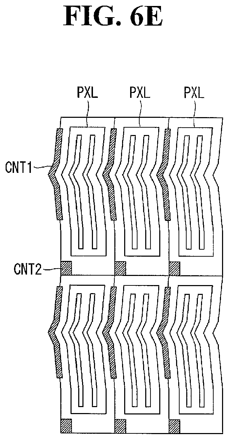

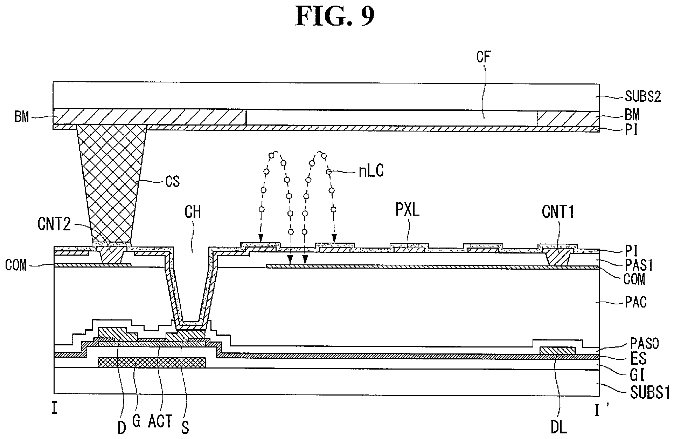

The following embodiments, examples and drawings are not all claimed, they are included to help understanding the context of the invention. Among the following embodiments, examples and drawings helping to understand the context, the claimed invention, which is characterized in that a conductive connector between an alignment layer and a common or pixel electrode overlaps both a spacer and a thin film transistor, covered by a black matrix, is in particular illustrated in figures 6E and 9 and corresponding embodiments (see also paras. 52, 53 and paras. 65, 66, 69).

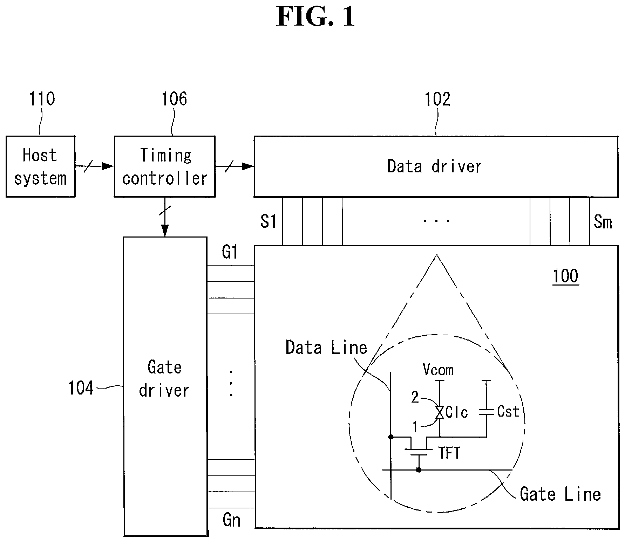

Referring to FIG. 1, a liquid crystal display according to an exemplary embodiment of the invention includes a display panel 100 including a pixel array, a display panel driver for writing data of an input image on the display panel 100, and the like. A backlight unit for uniformly irradiating light onto the display panel 100 may be disposed under the display panel 100.

The liquid crystal display according to the embodiment of the invention may be implemented as any type liquid crystal display including a transmissive liquid crystal display, a transflective liquid crystal display, and a reflective liquid crystal display. The transmissive liquid crystal display and the transflective liquid crystal display require the backlight unit. The backlight unit may be implemented as a direct type backlight unit or an edge type backlight unit.

The display panel 100 includes an upper plate and a lower plate, which are positioned opposite each other with a liquid crystal layer interposed therebetween. The pixel array of the display panel 100 includes pixels arranged in a matrix form based on a crossing structure of data lines S1 to Sm and gate lines G1 to Gn. Each pixel adjusts a transmission amount of light using liquid crystal molecules driven by a voltage difference between a pixel electrode 1 charged to a data voltage through a thin film transistor (TFT) and a common electrode 2, to which a common voltage Vcom is supplied.

The lower plate of the display panel 100 includes the data lines S1 to Sm, the gate lines G1 to Gn, the common electrode 2, thin film transistors (TFTs), the pixel electrodes 1 connected to the TFTs, storage capacitors Cst connected to the pixel electrodes 1, and the like. Each TFT is formed in each subpixel and is connected to the pixel electrode 1. The TFT may be implemented as an amorphous silicon (a-Si) TFT, a low temperature polysilicon (LTPS) TFT, an oxide TFT, and the like. The TFTs are respectively connected to the pixel electrodes 1 of the subpixels. The common electrode 2 and the pixel electrode 1 are separated from each other with an insulating layer interposed therebetween.

A color filter array including black matrixes and color filters is formed on the upper plate of the display panel 100.

The liquid crystal layer is formed between the upper plate and the lower plate of the display panel 100. Polarizing plates are respectively attached to the upper plate and the lower plate of the display panel 100. Alignment layers for setting a pretilt angle of liquid crystals are respectively formed on the upper plate and the lower plate of the display panel 100. The alignment layer is formed of a polymer material capable of being photoaligned, for example, polyimide. A spacer for maintaining a cell gap of a liquid crystal cell Clc may be formed between the upper plate and the lower plate of the display panel 100.

The embodiment of the invention brings the alignment layer into contact with the common electrode 2 and the pixel electrode 1 and forms a discharge path on the alignment layer, so as to reduce image persistence and a flicker of the liquid crystal display.

The embodiment of the invention implements the TFT of the pixel array as the oxide TFT and implements the liquid crystal layer using negative liquid crystals (nLC), so as to further improve image quality of the liquid crystal display in a low speed driving mode.

Further, photoalignment processing is performed on the alignment layer.

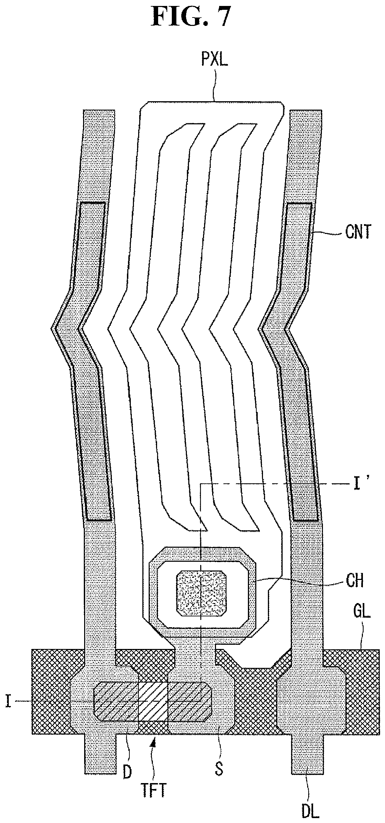

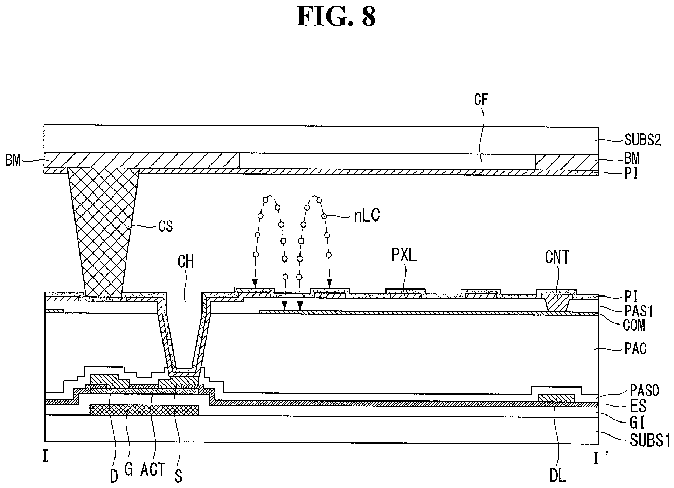

Because a leakage current of the oxide TFT in an off-state is very low, a discharge of the pixels can be suppressed in the low speed driving mode. The oxide TFT may be applied to a liquid crystal display using an etch stopper ES (refer to FIGS. 7 and 8) and also may be applied to a back channel etch (BCE) liquid crystal display.

The photoalignment layer may improve a contrast ratio by reducing a light leakage phenomenon. Ultraviolet ray is irradiated onto the photoalignment layer in an alignment process of the liquid crystal molecules. The photoalignment layer causes the pretilt angle of the liquid crystal to be close to zero and can implement the uniform image quality irrespective of a viewing angle.

Because a transmittance of the negative liquid crystal is greater than a transmittance of a positive liquid crystal, the negative liquid crystals may improve a luminance of an image. The negative liquid crystal is a liquid crystal, in which a difference between a dielectric constant of a long axis and a dielectric constant of a short axis is a negative value. When a voltage is applied to the negative liquid crystal, a short axis of a liquid crystal molecule is parallel to an electric field E.

The display panel driver includes a data driver 102 and a gate driver 104. The display panel driver operates in the low speed driving mode when a static image is input under the control of a timing controller 106, and operates in a normal driving mode when a motion picture is input under the control of the timing controller 106. A frame frequency (or a frame rate) of the low speed driving mode is lower than a frame frequency of the normal driving mode.

The data driver 102 includes a plurality of source driver ICs. Data output channels of the source driver ICs are connected to the data lines S1 to Sm of the pixel array. The source driver ICs receive digital video data of the input image from the timing controller 106. The source driver ICs convert the digital video data of the input image into positive and negative gamma compensation voltages under the control of the timing controller 106 and output positive and negative data voltages. An output voltage of the source driver ICs is supplied to the data lines S1 to Sm. Because a frame frequency of each of the source driver ICs of the data driver 102 is reduced in the low speed driving mode, an operating frequency of each source driver IC is reduced.

Each source driver IC inverts a polarity of the data voltage to be supplied to the pixels under the control of the timing controller 106 and outputs it to the data lines S1 to Sm. The source driver ICs maintain the polarity of the data voltage applied to the data lines S1 to Sm during one frame period and then may invert the polarity of the data voltage in each frame period. A length of one frame period in the low speed driving mode increases due to the reduced frame frequency.

The gate driver 104 sequentially supplies gate pulses synchronized with the data voltage to the gate lines G1 to Gn under the control of the timing controller 106. The gate pulses output from the gate driver 104 are synchronized with the positive and negative data voltages, to which the pixels will be charged. The gate driver 104 may be directly formed on the lower plate of the display panel 100 along with the pixel array, so as to reduce the cost of gate driver ICs. Because a frame frequency of the gate driver 104 is reduced in the low speed driving mode, an operating frequency of the gate driver 104 is reduced.

The timing controller 106 transmits the digital video data of the input image received from a host system 110 to the data driver 102. The timing controller 106 receives timing signals synchronized with the data of the input image from the host system 110. The timing signals include a vertical sync signal Vsync, a horizontal sync signal Hsync, a data enable signal DE, and a clock CLK, etc. The timing controller 106 controls operation timings of the data driver 102 and the gate driver 104 based on the timing signals Vsync, Hsync, DE, and CLK received along with pixel data of the input image. The timing controller 106 may transmit a polarity control signal for controlling a polarity of the pixel array to each of the source driver ICs of the data driver 102.

The timing controller 106 may control the operation timing of the display panel driver at a frame frequency (unit: Hz) of {(a frame frequency of the input image) × N} in the normal driving mode, where N is a positive integer. The frame frequency of the input image in the normal driving mode is 60 Hz in a NTSC (National Television Standards Committee) manner and is 50 Hz in a PAL (Phase-Alternating Line) manner. The frame frequency of the input image in the low speed driving mode may be reduced to 1 Hz to 30 Hz, but is not limited thereto.

The host system 110 may be implemented as one of a television system, a set-top box, a navigation system, a DVD player, a Blu-ray player, a personal computer (PC), a home theater system, and a phone system.

The liquid crystal display according to the embodiment of the invention further includes a power unit (not shown). The power unit generates voltages required to drive the display panel 100 using a DC-DC converter. The voltages includes a high potential power voltage Vdd, a logic power voltage Vcc, a gamma reference voltage, a gate high voltage VGH, a gate low voltage VGL, a common voltage Vcom, and the like. The high potential power voltage Vdd is a maximum value of the data voltage, to which the pixels of the display panel 100 will be charged. The logic power voltage Vcc is a power voltage required to drive the timing controller 106, the source driver ICs of the data driver 102, and the gate driver ICs of the gate driver 104. The gate high voltage VGH is a high logic voltage of the gate pulse, which is set to be equal to or greater than a threshold voltage of the TFTs of the pixel array. The gate low voltage VGL is a low logic voltage of the gate pulse, which is set to be less than the threshold voltage of the TFTs of the pixel array. The gate high voltage VGH and the gate low voltage VGL are supplied to the gate driver 104. The gate pulse swings between the gate high voltage VGH and the gate low voltage VGL. The common voltage Vcom is supplied to the common electrode 2 of the liquid crystal cells Clc. The power unit divides the high potential power voltage Vdd and generates the gamma reference voltage. The gamma reference voltage is supplied to the source driver ICs of the data driver 102. The source driver ICs divide the gamma reference voltage and generate positive and negative gamma compensation voltages of each gray level. The source driver ICs convert the digital video data into the positive and negative gamma compensation voltages and output the data voltage.

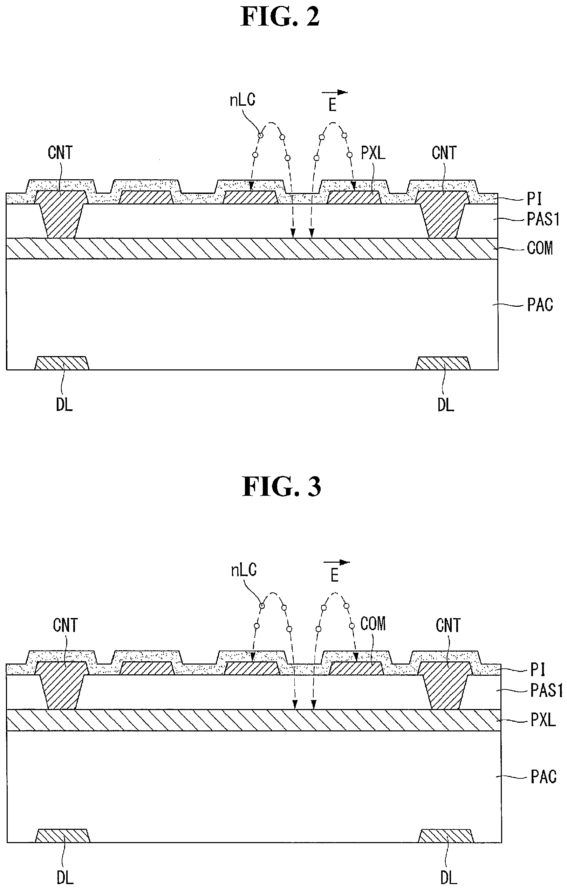

FIG. 2 shows a structure of a lower plate of a liquid crystal display according to a first embodiment of the invention.

Referring to FIG. 2, the liquid crystal display according to the first embodiment of the invention includes a pixel electrode PXL disposed over a common electrode COM with an insulating layer interposed therebetween, a conductive connector CNT contacting the common electrode COM, and an alignment layer PI contacting the pixel electrode PXL and the conductive connector CNT. A passivation layer PAS1 is an insulating layer formed between the common electrode COM and the pixel electrode PXL. Because the conductive connector CNT is connected to the common electrode COM, the conductive connector CNT may be a portion of the common electrode COM.

In the first embodiment of the invention, the common electrode COM is a lower electrode positioned under the pixel electrode PXL, and the pixel electrode PXL is an upper electrode.

The conductive connector CNT is formed on the same level layer as the pixel electrode PXL, is filled in a contact hole passing through the passivation layer PAS1, and contacts the common electrode COM. The conductive connector CNT contacts the alignment layer PI. The conductive connector CNT is formed of the same material as the pixel electrode PXL and may be patterned at the same time as the pixel electrode PXL, but is not limited thereto. The conductive connector CNT may be formed of a metal material different from the pixel electrode PXL. The conductive connector CNT connects the alignment layer PI to the pixel electrode PXL and the common electrode COM and forms a discharge path of ions accumulated on the alignment layer PI. The conductive connector CNT covers the common electrode COM and prevents the common electrode COM from being etched in a process for etching the pixel electrode PXL. Further, the conductive connector CNT prevents an increase in a height difference in a connection portion between the alignment layer PI and the common electrode COM.

The common electrode COM may be formed on an organic passivation layer PAC. The conductive connector CNT may overlap one of the data line DL and the spacer, so as to minimize a reduction in an aperture ratio of the pixel. Alternatively, the conductive connector CNT may overlap both the data line DL and the spacer.

The black matrix overlaps the TFT, the data line DL, the gate line GL, the spacer, and the conductive connector CNT, so that the above components are not seen.

FIG. 3 shows a structure of a lower plate of a liquid crystal display according to a second embodiment of the invention.

Referring to FIG. 3, the liquid crystal display according to the second embodiment of the invention includes a common electrode COM disposed over a pixel electrode PXL with an insulating layer interposed therebetween, a conductive connector CNT contacting the pixel electrode PXL, and an alignment layer PI contacting the common electrode COM and the conductive connector CNT. A passivation layer PAS1 is an insulating layer formed between the common electrode COM and the pixel electrode PXL. Because the conductive connector CNT is connected to the pixel electrode PXL, the conductive connector CNT may be a portion of the pixel electrode PXL.

In the second embodiment of the invention, the pixel electrode PXL is a lower electrode positioned under the common electrode COM, and the common electrode COM is an upper electrode.

The conductive connector CNT is formed on the same level layer as the common electrode COM, is filled in a contact hole passing through the passivation layer PAS1, and contacts the pixel electrode PXL. The conductive connector CNT contacts the alignment layer PI. The conductive connector CNT is formed of the same material as the common electrode COM and may be patterned at the same time as the common electrode COM, but is not limited thereto. The conductive connector CNT may be formed of a metal material different from the common electrode COM. The conductive connector CNT connects the alignment layer PI to the pixel electrode PXL and the common electrode COM and forms a discharge path of ions accumulated on the alignment layer PI. The conductive connector CNT covers the pixel electrode PXL and prevents the pixel electrode PXL from being etched in a process for etching the common electrode COM. Further, the conductive connector CNT prevents an increase in a height difference in a connection portion between the alignment layer PI and the common electrode COM.

The pixel electrode PXL may be formed on an organic passivation layer PAC. The conductive connector CNT may overlap the data line DL or may overlap the spacer, so as to minimize a reduction in an aperture ratio of the pixel. The black matrix overlaps the TFT, the data line DL, the gate line GL, and the spacer, so that the above components are not seen.

The present inventor conducted an image persistence and flicker experiment on various alignment layers each having a different resistance. According to the image persistence experiment, because a discharge path of ions was formed when the alignment layer contacted the pixel electrode PXL and the common electrode COM, a problem of the image persistence and the flicker was improved. The present inventor confirmed an improvement effect of the image persistence and the flicker when the resistance of the alignment layer PI was high. Further, the present inventor conducted the image persistence experiment depending on changes in a ratio of a contact area between the alignment layer PI and the pixel electrode PXL to a contact area between the alignment layer and the common electrode COM. As a result of the image persistence experiment, the present inventor confirmed the improvement effect of the image persistence when the ratio is changed.

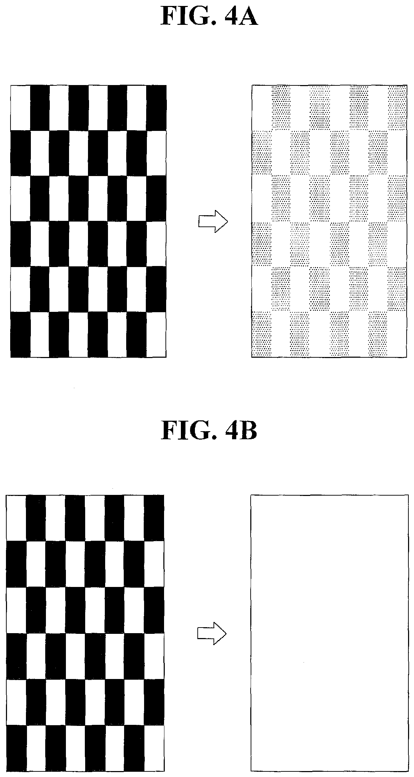

FIGS. 4A and 4B show a result of an image persistence and flicker experiment of a related art and an embodiment of the invention. In the image persistence experiment, a sample selected as the related art is a liquid crystal display, in which a common electrode COM and a pixel electrode PXL are separated from each other with an insulating layer interposed therebetween and an alignment layer PI is connected only to the pixel electrode PXL.

In the image persistence experiment, a sample selected as the embodiment is a liquid crystal display of FIGS. 7 to 9 including the lower plate of the structure shown in FIG. 2. The image persistence and flicker experiment is an experiment conforming whether or not the image persistence is generated when after white gray level blocks and black gray level blocks are displayed on the screen of the liquid crystal display and are maintained for a predetermined period of time, a gray level of pixel data is changed to a middle gray level, for example, "127" throughout the entire screen of the liquid crystal display. As a result of the image persistence experiment, the image persistence was confirmed in the related art as shown in FIG. 4A, but the image persistence was not generated in the embodiment as shown in FIG. 4B.

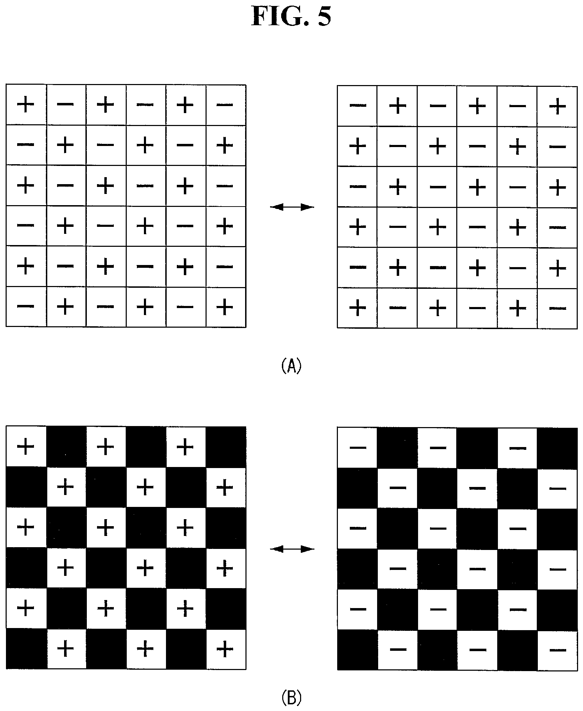

FIG. 5 shows an image pattern of a sample used in an image persistence experiment.

In FIG. 5, (A) shows pixels of a white gray level block in a solid pattern for inducing the image persistence in the liquid crystal display. In case of the solid pattern, after a white gray level voltage is supplied to positive pixels and negative pixels of the white gray level block, a middle gray level voltage is supplied to the positive pixels and the negative pixels of the white gray level block after a predetermined period of time passed. After a black gray level voltage is supplied to positive pixels and negative pixels of the black gray level block, a middle gray level voltage is supplied to the positive pixels and the negative pixels of the black gray level block after a predetermined period of time passed. The positive pixels are pixels, to which the positive data voltage is supplied, and the negative pixels are pixels, to which the negative data voltage is supplied. The polarity of the data voltage is inverted on a per frame basis.

In FIG. 5, (B) shows pixels of a white gray level block in a flicker pattern for inducing the flicker in the liquid crystal display. In case of the flicker pattern, a white gray level voltage is supplied to pixels of a first polarity in the white gray level block, and a black gray level voltage is supplied to pixels of a second polarity in the white gray level block. After a predetermined period of time passed, a middle gray level voltage is supplied to the pixels. The first polarity is a positive polarity or a negative polarity, and the second polarity is a polarity different from the first polarity. After a black gray level voltage is supplied to positive pixels and negative pixels of the black gray level block, a middle gray level voltage is supplied to the positive pixels and the negative pixels of the black gray level block after a predetermined period of time passed.

As shown in FIGS. 6A to 6E, the present inventor confirmed the improvement effect of the image persistence while variously changing a ratio of a contact area between the alignment layer PI and the pixel electrode PXL to a contact area between the alignment layer PI and the common electrode COM in the image persistence experiment. In FIGS. 6A to 6E, the size of the contact area between the alignment layer PI and the pixel electrode PXL is not changed, and the size of the contact area between the alignment layer PI and the common electrode COM is changed. As shown in FIGS. 6A to 6E, the size of the contact area between the alignment layer PI and the common electrode COM is changed depending on changes in the number and the size of conductive connectors CNT.

The alignment layer PI contacts the common electrode COM through conductive connectors CNT, CNT1, and CNT2 disposed on the data line DL or on a column spacer CS and directly contacts the pixel electrode PXL. In FIG. 6E, "CNT1" is a first conductive connector disposed on the data line DL, and "CNT2" is a second conductive connector overlapping the column spacer CS. The conductive connectors CNT, CNT1, and CNT2 overlap the black matrix BM and are covered by the black matrix BM. FIG. 9 is a cross-sectional view showing the conductive connectors CNT1 and CNT2 shown in FIG. 6E.

According to the result of the image persistence and flicker experiment, the present inventor confirmed the improvement effect of the image persistence as indicated by the following Table 1 when the ratio of the contact area between the alignment layer PI and the pixel electrode PXL to the contact area between the alignment layer PI and the common electrode COM was 2:1 to 6:1.

**[Table 1]**

| Drawing | | FIG. 6A | FIG. 6B | FIG. 6C | FIG. 6D | FIG. 6E |
|---|---|---|---|---|---|---|
| Contact area of alignment layer | Pixel electrode (PXL) | 4776.0 µm² | 4776.0 µm² | 4776.0 µm² | 4776.0 µm² | 4776.0 µm² |
| | Common electrode (COM) | 729.1 µm² | 727.4 µm² | 1212.8 µm² | 1480.6 µm² | 2303.9 µm² |
| Ratio of contact area (PXL : COM) | | 6:1 | 6:1 | 4:1 | 3:1 | 2 : 1 |
| Contact location | | Contact on both sides of data line in each subpixel | Contact on one side of data line in each subpixel | Increase in contact area on both sides of data line in each subpixel | Further increase in contact area on both sides of data line in each subpixel | Contact on both sides of data line and contact at a location of spacer in each subpixel |

FIG. 7 is a plane view enlarging one subpixel in the liquid crystal display according to the first embodiment of the invention. FIG. 8 is a cross-sectional view taken along line I-I' of FIG. 7 and shows a cross-sectional structure of the lower plate of the liquid crystal display. FIG. 9 is a cross-sectional view showing the conductive connectors CNT1 and CNT2 shown in FIG. 6E. The liquid crystal display shown in FIGS. 7 to 9 includes the lower plate of the structure shown in FIG. 2.

Referring to FIGS. 7 to 9, the lower plate includes a TFT, a gate insulating layer GI, an etch stopper ES, a first inorganic passivation layer PAS0, an organic passivation layer PAC, a common electrode COM, a second inorganic passivation layer PAS1, a conductive connector CNT, a pixel electrode PXL, and a lower alignment layer PI.

The gate line GL and a gate G of the TFT are formed on a lower substrate SUBS1. The gate insulating layer GI is formed of an inorganic insulating material such as SiOx and SiNx and covers the gate G of the TFT. The gate G of the TFT is integrated with the gate line GL. A semiconductor pattern ACT is formed on the gate insulating layer GI and overlaps the gate G of the TFT. The semiconductor pattern ACT is formed of a semiconductor material, such as amorphous silicon (a-Si), low temperature polysilicon (LTPS), and oxide semiconductor, and is used as an active channel layer of the TFT. A source S and a drain D of the TFT are formed on the semiconductor pattern ACT and overlap the gate G of the TFT. The drain D of the TFT is integrated with the data line DL. The source S of the TFT contacts the pixel electrode PXL through a contact hole CH passing through the first inorganic passivation layer PAS0, the organic passivation layer PAC, and the second inorganic passivation layer PAS1. The etch stopper ES is formed of an inorganic insulating material such as SiOx and is formed on the semiconductor pattern ACT and the gate insulating layer GI. The etch stopper ES protects the semiconductor pattern ACT from an etchant when the source S and the drain D of the TFT are etched. The first inorganic passivation layer PAS0 is formed of an inorganic insulating material, such as SiOx and SiNx, and covers the TFT and the etch stopper ES. The organic passivation layer PAC is formed of an organic insulating material, such as photo-acryl, and covers the first inorganic passivation layer PAS0. The common electrode COM, the conductive connector CNT, and the pixel electrode PXL may be formed of a transparent electrode material, such as indium tin oxide (ITO).

The common electrode COM is formed on the organic passivation layer PAC. The second inorganic passivation layer PAS1 is formed of an inorganic insulating material, such as SiOx and SiNx, and covers the common electrode COM. The conductive connector CNT is connected to the common electrode COM through a contact hole passing through the second inorganic passivation layer PAS1. The pixel electrode PXL is formed on the second inorganic passivation layer PAS1 and overlaps the common electrode COM. The pixel electrode PXL and the conductive connector CNT may be simultaneously formed using the same material. The pixel electrode PXL contacts the source S of the TFT through the contact hole CH.

The lower alignment layer PI is formed on the second inorganic passivation layer PAS1 and covers the pixel electrode PXL and the conductive connector CNT. The lower alignment layer PI directly contacts the pixel electrode PXL and is connected to the common electrode COM through the conductive connector CNT. The lower alignment layer PI contacts the negative liquid crystal nLC on the lower plate and is photoaligned. Hence, the lower alignment layer PI sets the pretilt angle of the liquid crystal molecules.

The upper plate includes a black matrix BM, a color filter CF, an upper alignment layer PI, and a column spacer CS. The black matrix BM and the color filter CF are formed on an upper substrate SUBS2. The upper alignment layer PI contacts the negative liquid crystal nLC on the upper plate and is photoaligned. Hence, the upper alignment layer PI sets the pretilt angle of the liquid crystal molecules. The column spacer CS is formed between the upper plate and the lower plate and maintains a cell gap of a negative liquid crystal layer.

A position of the pixel electrode PXL and the common electrode COM in the liquid crystal display according to the second embodiment of the invention and a position of the pixel electrode PXL and the common electrode COM in the liquid crystal display shown in FIGS. 7 to 9 are reversed. Thus, in FIGS. 7 to 9, the pixel electrode PXL is connected to the TFT.

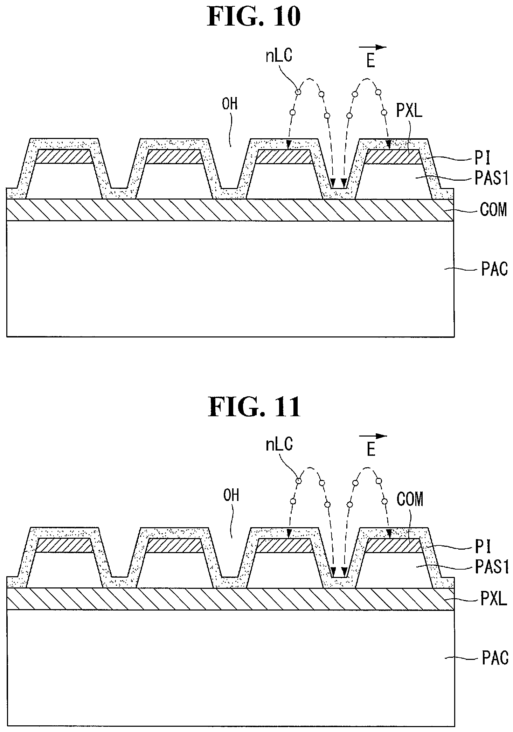

FIG. 10 shows a structure of a lower plate of a liquid crystal display according to a not claimed example.

Referring to FIG. 10, the liquid crystal display includes a pixel electrode PXL disposed over a common electrode COM with an insulating layer interposed therebetween and an alignment layer PI contacting the pixel electrode PXL and the common electrode COM. A passivation layer PAS1 is an insulating layer formed between the common electrode COM and the pixel electrode PXL.

In this example, the common electrode COM is a lower electrode positioned under the pixel electrode PXL, and the pixel electrode PXL is an upper electrode.

The passivation layer PAS1 has an open hole OH exposing the common electrode COM. The open hole OH exposes the common electrode COM in all of areas except the pixel electrode PXL. For example, the open hole OH exposes the common electrode COM between the pixel electrodes PXL in an open area of the pixel and also exposes the common electrode COM in a unopened area covered by the black matrix. The alignment layer PI contacts the pixel electrode PXL and contacts the common electrode COM through the open hole OH. Because the alignment layer PI is directly connected to the pixel electrode PXL and the common electrode COM, ions accumulated on the alignment layer PI are discharged through the pixel electrode PXL and the common electrode COM.

Because the open hole OH exposes the common electrode COM in a portion other than the pixel electrode PXL, a contact area between the alignment layer PI and the common electrode COM in this unclaimed example may increase compared to the above-described embodiments. When the contact area between the alignment layer PI and the common electrode COM decreases or a contact resistance therebetween increases, there is a change in an improvement effect of the image persistence and the flicker depending on a material of the alignment layer PI. According to the result of experiment, as shown in FIG. 10, when the contact area between the alignment layer PI and the common electrode COM increases, the image persistence and the flicker may be remarkably improved even if there is a change in a composition or the physical properties of the alignment layer PI.

FIG. 11 shows a structure of a lower plate of a liquid crystal display according to another unclaimed example.

Referring to FIG. 11, the liquid crystal display according to this example includes a common electrode COM disposed over a pixel electrode PXL with an insulating layer interposed therebetween and an alignment layer PI contacting the pixel electrode PXL and the common electrode COM. A passivation layer PAS1 is an insulating layer formed between the common electrode COM and the pixel electrode PXL.

In this example, the pixel electrode PXL is a lower electrode positioned under the common electrode COM, and the common electrode COM is an upper electrode.

A passivation layer PAS1 has an open hole OH exposing the pixel electrode PXL. For example, the open hole OH exposes the pixel electrode PXL between the common electrodes COM in an open area of the pixel. The alignment layer PI contacts the pixel electrode PXL and contacts the common electrode COM through the open hole OH. Because the alignment layer PI is directly connected to the pixel electrode PXL and the common electrode COM, ions accumulated on the alignment layer PI are discharged through the pixel electrode PXL and the common electrode COM.

This example is substantially the same as the previous example except that positions of the common electrode COM and the pixel electrodes PXL are reversed.

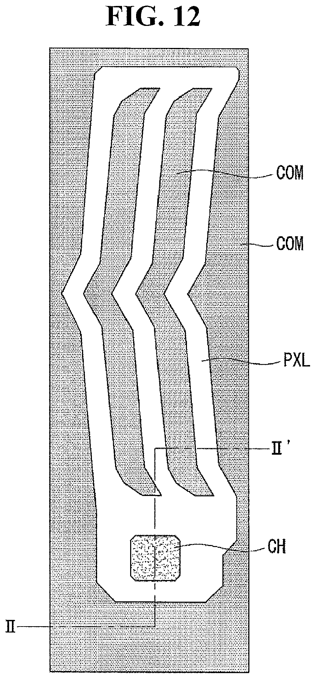

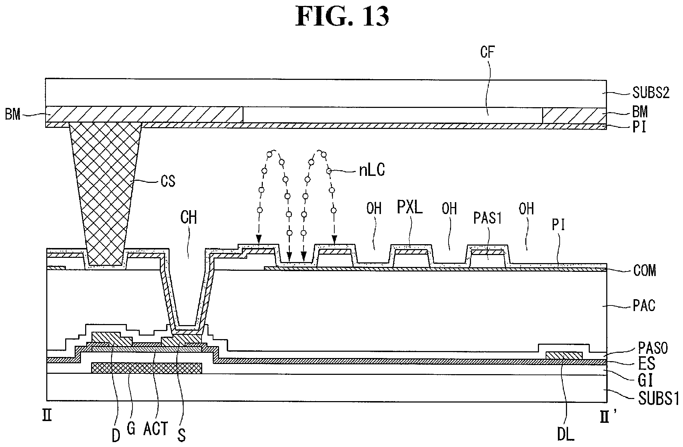

FIG. 12 is a plane view enlarging one subpixel in the liquid crystal display according to FIG: 10. FIG. 13 is a cross-sectional view taken along line II-II' of FIG. 12 and shows a cross-sectional structure of a lower plate of the liquid crystal display.

Referring to FIGS. 12 and 13, the liquid crystal display includes an upper plate and a lower plate, which are attached to each other with a liquid crystal layer interposed therebetween. The structure of the upper plate is substantially the same as the above-described embodiments. The lower plate includes a TFT, a gate insulating layer GI, an etch stopper ES, a first inorganic passivation layer PAS0, an organic passivation layer PAC, a common electrode COM, a second inorganic passivation layer PAS1, a pixel electrode PXL, and a lower alignment layer PI.

The gate line GL and a gate G of the TFT are formed on a lower substrate SUBS1. The gate insulating layer GI is formed of an inorganic insulating material such as SiOx and SiNx and covers the gate G of the TFT. The gate G of the TFT is integrated with the gate line GL. A semiconductor pattern ACT is formed on the gate insulating layer GI and overlaps the gate G of the TFT. The semiconductor pattern ACT is formed of a semiconductor material, such as amorphous silicon (a-Si), low temperature polysilicon (LTPS), and oxide semiconductor, and is used as an active channel layer of the TFT. A source S and a drain D of the TFT are formed on the semiconductor pattern ACT and overlap the gate G of the TFT. The drain D of the TFT is integrated with the data line DL. The source S of the TFT contacts the pixel electrode PXL through a contact hole CH passing through the first inorganic passivation layer PAS0, the organic passivation layer PAC, and the second inorganic passivation layer PAS1. The etch stopper ES is formed of an inorganic insulating material such as SiOx and is formed on the semiconductor pattern ACT and the gate insulating layer GI. The etch stopper ES protects the semiconductor pattern ACT from an etchant when the source S and the drain D of the TFT are etched. The first inorganic passivation layer PAS0 is formed of an inorganic insulating material, such as SiOx and SiNx, and covers the TFT and the etch stopper ES. The organic passivation layer PAC is formed of an organic insulating material, such as photo-acryl, and covers the first inorganic passivation layer PAS0. The common electrode COM and the pixel electrode PXL may be formed of a transparent electrode material, such as indium tin oxide (ITO).

The common electrode COM is formed on the organic passivation layer PAC. The second inorganic passivation layer PAS1 is formed of an inorganic insulating material, such as SiOx and SiNx, and covers a portion of the common electrode COM. The second inorganic passivation layer PAS1 has the open hole OH exposing the common electrode COM. Because the open hole OH is patterned using a pixel electrode pattern as a mask, the open hole OH exposes the common electrode COM in all of areas except the pixel electrode PXL.

The pixel electrode PXL is formed on the second inorganic passivation layer PAS1 and overlaps the common electrode COM. The pixel electrode PXL contacts the source S of the TFT through the contact hole CH.

The lower alignment layer PI is formed on the second inorganic passivation layer PAS1 to cover the pixel electrode PXL and to cover the common electrode COM through the open hole OH. The lower alignment layer PI directly contacts the pixel electrode PXL and the common electrode COM. The lower alignment layer PI contacts the negative liquid crystal nLC on the lower plate and is photoaligned. Hence, the lower alignment layer PI sets the pretilt angle of the liquid crystal molecules.

When the positions of the pixel electrode PXL and the common electrode COM are reversed and the pixel electrode PXL is connected to the TFT in the liquid crystal display according to the example shown in FIGS. 12 and 13, the structure of the liquid crystal display according to this example is substantially the same as the structure of the liquid crystal display according to the example shown in FIG. 11.

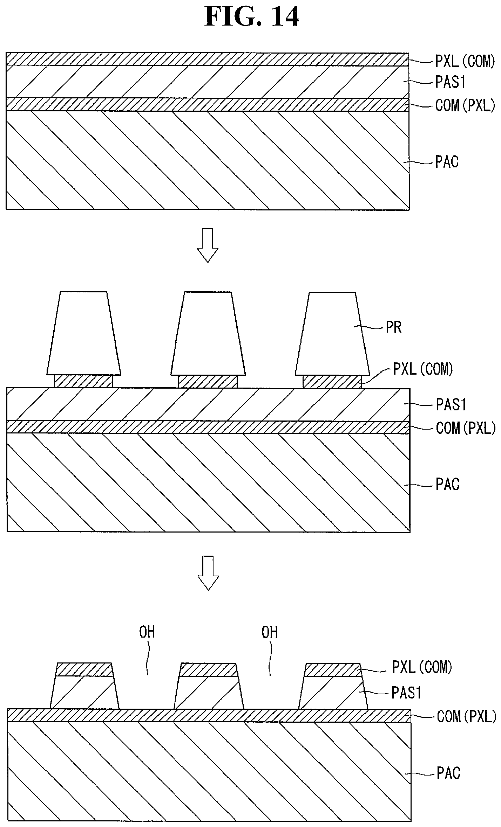

FIG. 14 is a cross-sectional view showing a method for forming the open hole in the liquid crystal display shown in FIG. 13.

Referring to FIG. 14, the passivation layer PAS1 and a pixel electrode material layer are stacked on the common electrode COM.

The passivation layer PAS1 and the pixel electrode PXL may be patterned through one photolithography process. A photoresist is applied to the pixel electrode material layer, and a photomask is aligned on the photoresist. An exposure process and a development process are performed to pattern the photoresist. Hence, a photoresist pattern PR is formed on the pixel electrode material layer.

This example performs a wet etching process to remain only the pixel electrode material layer underlying the photoresist pattern PR and to remove other pixel electrode material layer. Hence, the pixel electrode PXL is formed on the passivation layer PAS1. Subsequently, this example performs a dry etching process in a state where the photoresist pattern PR remains, to etch other passivation layer except the passivation layer covered by the photoresist pattern PR. Hence, the open hole OH exposing the common electrode COM is formed. The alignment layer PI (not shown in FIG. 14) is entirely applied to the lower plate. The alignment layer PI contacts the pixel electrode PXL and also contacts the common electrode COM through the open hole OH.

When the positions of the pixel electrode PXL and the common electrode COM in FIG. 14 are reversed, the structure of the liquid crystal display shown in FIG. 14 is substantially the same as the structure of the liquid crystal display shown in FIG. 11.

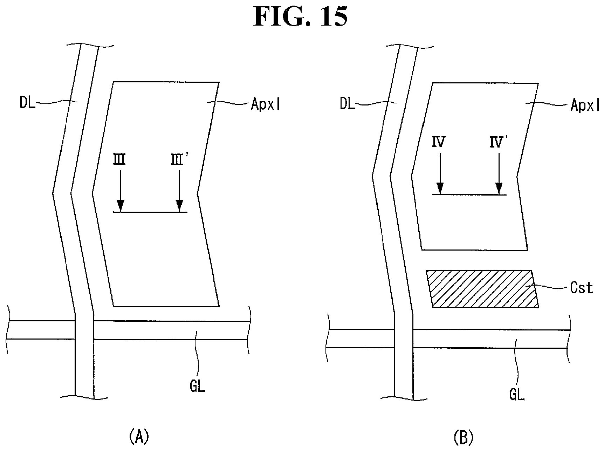

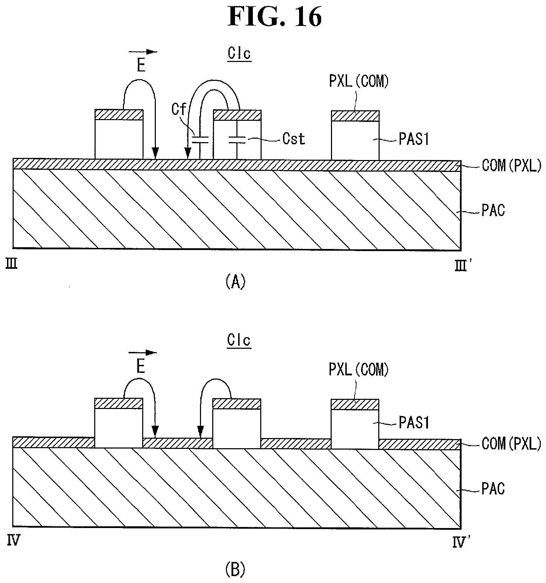

The liquid crystal display overlaps the pixel electrode PXL and the common electrode COM in a vertical direction and forms the storage capacitor Cst between the pixel electrode PXL and the common electrode COM. As a result, this example brings the alignment layer PI into contact with the pixel electrode PXL and the common electrode COM, thereby improving the image persistence and the flicker of the liquid crystal display. Further, because the example does not separately form the wide storage capacitor Cst in the pixel, the aperture ratio of the pixel may increase. An increase effect of the aperture ratio is described in detail with reference to FIGS. 15 and 16.

FIGS. 15 and 16 show a comparison between a pixel structure according to the just discussed example and a pixel structure according to a comparative example. In the comparative example, the common electrode COM is exposed through the open hole passing through the insulating layer PAS1, and the pixel electrode PXL and the common electrode COM do not overlap each other. The comparative example has the pixel structure similar to the just discussed example, but is different from 1 the just discussed example in the structure of the storage capacitor. It should be noted that the comparative example is not a widely known related art.

FIG. 15 is a plane view showing a comparison between the above discussed example and the comparative example with respect to an open area of a pixel structure. FIG. 16 is cross-sectional views taken along lines III-III' and IV- IV' of FIG. 15 and shows a cross-sectional structure of a lower plate of the liquid crystal display.

FIG. 15 (A) and FIG. 16 (A) show the pixel structure according to the example shown in FIGS. 11 and 12, and FIG. 15 (B) and FIG. 16 (B) show the pixel structure according to the comparative example.

In the pixel structure, because the pixel electrode PXL and the common electrode COM overlap each other, the storage capacitor Cst is formed between the pixel electrode PXL and the common electrode COM. On the other hand, in the pixel structure according to the comparative example, because the pixel electrode PXL and the common electrode COM do not overlap each other, the storage capacitor Cst having a wide area has to be provided. Thus, this example may further increase the open area of the pixel compared to the comparative example, thereby increasing the aperture ratio and the transmittance of the pixel.

Further, because a fringe field capacitance between the pixel electrode PXL and the common electrode COM in this example is greater than that in the comparative example, a fringe field driving the liquid crystals may be applied more strongly than the comparative example.

As described above, the liquid crystal display according to the example, in which the upper electrode and the lower electrode overlap each other with the insulating layer interposed therebetween, brings the alignment layer into contact with the lower electrode through the contact hole passing through the insulating layer. Hence, the example brings the alignment layer into contact with the upper electrode and the lower electrode and forms the discharge path of ions accumulated on the alignment layer, thereby preventing the accumulation of ions in the normal driving mode and the low speed driving mode. As a result, the example can prevent a reduction in the image quality resulting from the image persistence and the flicker. Further, the example may improve the image quality in the low speed driving mode using the negative liquid crystal, the photoalignment layer, and the oxide TFT.

Although embodiments have been described with reference to a number of illustrative embodiments thereof, it should be understood that numerous other modifications and embodiments can be devised by those skilled in the art that will fall within the scope of appended claims.

## Claims

1. A liquid crystal display comprising:
an upper plate and a lower plate positioned opposite each other with a liquid crystal layer interposed therebetween; and
a spacer (CS) positioned between the upper plate and the lower plate, wherein the upper plate includes a black matrix (BM),
wherein the lower plate includes:
a gate line(GL) and a data line (DL) configured to cross each other,
a lower electrode (COM; PXL) and an upper electrode (PXL; COM) configured to overlap each other with an insulating layer (PAS1) interposed therebetween and
an alignment layer (PI) configured to be in contact with the lower electrode and the upper electrode;
wherein the lower plate further comprises a thin film transistor (TFT) connected to the gate line (GL), to the data line (DL) and to a pixel electrode (PXL), the pixel electrode (PXL) being one of the lower electrode (COM; PXL) and the upper electrode (PXL; COM),
wherein the alignment layer (PI) is in contact with the lower electrode (COM; PXL) via a first conductive connector (CNT2) disposed in a hole passing through the insulating layer (PAS1) and contacting the lower electrode (COM; PXL),
wherein the first conductive connector (CNT2) overlaps both the spacer (CS) and the thin film transistor (TFT) and wherein the gate line (GL), the data line (DL), the thin film transistor (TFT), the spacer (CS) and the first conducive connector (CNT2)are covered by the black matrix.

2. The liquid crystal display of claim 1, wherein the lower plate includes a second conductive connector (CNT1) that overlaps the data line (DL), and the first conductive connector (CNT2) that overlaps both the spacer (CS) and the thin film transistor (TFT).

3. The liquid crystal display of claim 1 or 2, wherein the first conductive connector (CNT2) is formed of the same material as the upper electrode (PXL; COM) and is formed on the same level layer as the upper electrode (PXL; COM).

4. The liquid crystal display of claim 1, wherein the hole exposes the lower electrode (COM; PXL) in an area other than the upper electrode.

5. The liquid crystal display of any one of the preceding claims, wherein the liquid crystal layer includes a negative liquid crystal (nLC).

6. The liquid crystal display of any one of the preceding claims, wherein the alignment layer (PI) is a photoalignment layer.

7. The liquid crystal display of any one of the preceding claims, wherein the lower electrode (COM) is a common electrode, to which a common voltage is supplied, and
wherein the upper electrode (PXL) is the pixel electrode, to which a data voltage is supplied.

8. The liquid crystal display of any one of claims 1 to 6, wherein the upper electrode (COM) is a common electrode, to which a common voltage is supplied, and
wherein the lower electrode (PXL) is the pixel electrode, to which a data voltage is supplied.

9. The liquid crystal display of claim 7, wherein the ratio of the contact area between the alignment layer (PI) and the pixel electrode to the contact area between the alignment layer (PI) and the common electrode is in the range of 6:1 to 2:1.

## Patentansprüche

1. Flüssigkristallanzeige, die Folgendes umfasst:
eine obere Platte und eine untere Platte, die einander gegenüber positioniert sind, wobei eine Flüssigkristallschicht dazwischen eingefügt ist, und
einen Abstandshalter (CS), der zwischen der oberen Platte und der unteren Platte positioniert ist,
wobei die obere Platte eine schwarze Matrix (BM) umfasst,
wobei die untere Platte Folgendes umfasst:
eine Gate-Leitung (GL) und eine Datenleitung (DL), die konfiguriert sind, einander zu kreuzen,
eine untere Elektrode (COM; PXL) und eine obere Elektrode (PXL; COM), die konfiguriert sind, einander mit einer dazwischen eingefügten Isolierschicht (PAS1) zu überlappen, und
eine Ausrichtungsschicht (PI), die konfiguriert ist, in Kontakt mit der unteren Elektrode und der oberen Elektrode zu sein;
wobei die untere Platte ferner einen Dünnschichttransistor (TFT) umfasst, der mit der Gate-Leitung (GL), mit der Datenleitung (DL) und mit einer Pixelelektrode (PXL) verbunden ist, wobei die Pixelelektrode (PXL) die untere Elektrode (COM; PXL) oder die obere Elektrode (PXL; COM) ist,
wobei die Ausrichtungsschicht (PI) über einen ersten leitfähigen Verbinder (CNT2), der in einem Lochdurchgang durch die Isolierschicht (PAS1) angeordnet ist und die untere Elektrode (COM; PXL) kontaktiert, mit der unteren Elektrode (COM; PXL) in Kontakt ist,
wobei der erste leitfähige Verbinder (CNT2) sowohl den Abstandshalter (CS) als auch den Dünnschichttransistor (TFT) überlappt und wobei die Gate-Leitung (GL), die Datenleitung (DL), der Dünnschichttransistor (TFT), der Abstandshalter (CS) und der erste leitfähige Verbinder (CNT2) durch die schwarze Matrix bedeckt sind.

2. Flüssigkristallanzeige nach Anspruch 1, wobei die untere Platte einen zweiten leitfähigen Verbinder (CNT1), der mit der Datenleitung (DL) überlappt, und den ersten leitfähigen Verbinder (CNT2), der sowohl mit dem Abstandshalter (CS) als auch mit dem Dünnschichttransistor (TFT) überlappt, umfasst.

3. Flüssigkristallanzeige nach Anspruch 1 oder 2, wobei der erste leitfähige Verbinder (CNT2) aus dem gleichen Material wie die obere Elektrode (PXL; COM) gebildet ist und auf derselben Schicht wie die obere Elektrode (PXL; COM) gebildet ist.

4. Flüssigkristallanzeige nach Anspruch 1, wobei das Loch die untere Elektrode (COM; PXL) in einem anderen Bereich als die obere Elektrode freilegt.

5. Flüssigkristallanzeige nach einem der vorhergehenden Ansprüche, wobei die Flüssigkristallschicht einen negativen Flüssigkristall (nLC) enthält.

6. Flüssigkristallanzeige nach einem der vorhergehenden Ansprüche, wobei die Ausrichtungsschicht (PI) eine Photoausrichtungsschicht ist.

7. Flüssigkristallanzeige nach einem der vorhergehenden Ansprüche, wobei die untere Elektrode (COM) eine gemeinsame Elektrode ist, an die eine gemeinsame Spannung angelegt wird, und
wobei die obere Elektrode (PXL) die Pixelelektrode ist, an die eine Datenspannung angelegt wird.

8. Flüssigkristallanzeige nach einem der Ansprüche 1 bis 6, wobei die obere Elektrode (COM) eine gemeinsame Elektrode ist, an die eine gemeinsame Spannung angelegt wird, und
wobei die untere Elektrode (PXL) die Pixelelektrode ist, an die eine Datenspannung angelegt wird.

9. Flüssigkristallanzeige nach Anspruch 7, wobei das Verhältnis der Kontaktfläche zwischen der Ausrichtungsschicht (PI) und der Pixelelektrode zu der Kontaktfläche zwischen der Ausrichtungsschicht (PI) und der gemeinsamen Elektrode im Bereich von 6:1 bis 2:1 liegt.

## Revendications

1. Affichage à cristaux liquides comportant :
une plaque supérieure et une plaque inférieure positionnées à l'opposé l'une de l'autre avec une couche de cristaux liquides intercalée entre celles-ci ; et
un élément d'espacement (CS) positionné entre la plaque supérieure et la plaque inférieure,
dans lequel la plaque supérieure inclut une matrice noire (BM),
dans lequel la plaque inférieure inclut :
une ligne de grille (GL) et une ligne de données (DL) configurées pour se croiser mutuellement,
une électrode inférieure (COM ; PXL) et une électrode supérieure (PXL ; COM) configurées pour se chevaucher mutuellement avec une couche d'isolation (PAS1) intercalée entre celles-ci ; et
une couche d'alignement (PI) configurée pour être en contact avec l'électrode inférieure et l'électrode supérieure ;
dans lequel la plaque inférieure comporte en outre un transistor à couches minces (TFT) relié à la ligne de grille (GL), à la ligne de données (DL) et à une électrode de pixel (PXL), l'électrode de pixel (PXL) étant une électrode parmi l'électrode inférieure (COM ; PXL) et l'électrode supérieure (PXL ; COM),
dans lequel la couche d'alignement (PI) est en contact avec l'électrode inférieure (COM ; PXL) via un premier connecteur conducteur (CNT2) disposé dans un trou passant à travers la couche d'isolation (PAS1) et venant en contact avec l'électrode inférieure (COM ; PXL),
dans lequel le premier connecteur conducteur (CNT2) chevauche à la fois l'élément d'espacement (CS) et le transistor à couches minces (TFT) et dans lequel la ligne de grille (GL), la ligne de données (DL), le transistor à couches minces (TFT), l'élément d'espacement (CS) et le premier connecteur conducteur (CNT2) sont recouverts par la matrice noire.

2. Affichage à cristaux liquides selon la revendication 1, dans lequel la plaque inférieure inclut un second connecteur conducteur (CNT1) qui chevauche la ligne de données (DL), et le premier connecteur conducteur (CNT2) qui chevauche à la fois l'élément d'espacement (CS) et le transistor à couches minces (TFT).

3. Affichage à cristaux liquides selon la revendication 1 ou 2, dans lequel le premier connecteur conducteur (CNT2) est formé du même matériau que l'électrode supérieure (PXL ; COM) et est formé sur le même couche de niveau que l'électrode supérieure (PXL ; COM).

4. Affichage à cristaux liquides selon la revendication 1, dans lequel le trou expose l'électrode inférieure (COM ; PXL) dans une zone autre que l'électrode supérieure.

5. Affichage à cristaux liquides selon l'une quelconque des revendications précédentes, dans lequel la couche de cristaux liquides inclut un cristal liquide négatif (nLC).

6. Affichage à cristaux liquides selon l'une quelconque des revendications précédentes, dans lequel la couche d'alignement (PI) est une couche de photo-alignement.

7. Affichage à cristaux liquides selon l'une quelconque des revendications précédentes, dans lequel l'électrode inférieure (COM) est une électrode commune, à laquelle une tension commune est délivrée, et
dans lequel l'électrode supérieure (PXL) est l'électrode de pixel, à laquelle une tension de données est délivrée.

8. Affichage à cristaux liquides selon l'une quelconque des revendications 1 à 6, dans lequel l'électrode supérieure (COM) est une électrode commune, à laquelle une tension commune est délivrée, et
dans lequel l'électrode inférieure (PXL) est l'électrode de pixel, à laquelle une tension de données est délivrée.

9. Affichage à cristaux liquides selon la revendication 7, dans lequel le rapport de la surface de contact entre la couche d'alignement (PI) et l'électrode de pixel sur la surface de contact entre la couche d'alignement (PI) et l'électrode commune est dans la plage de 6:1 à 2:1.
